# EUROPÄISCHE PATENTANMELDUNG

(11) **EP 1 055 569 A2**
(43) Veröffentlichungstag der Anmeldung: **29.11.2000**
(21) Anmeldenummer: 00110399.3
(22) Anmeldetag: 16.05.2000
(51) Int. Cl.: B60R 25/02

(54) **Fahrzeugschloss mit Diebstahlsicherung**

(30) Priorität: 25.05.1999 DE 19923797
(71) Anmelder: Valeo Deutschland GmbH & Co. Sicherheitssysteme, 85253 Erdweg (DE)
(72) Erfinder: Thiele, Christoph, 80686 München (DE); Loderer, Karin, 85247 Schwabhausen (DE)
(74) Vertreter: COHAUSZ HANNIG DAWIDOWICZ & PARTNER

(57) **Zusammenfassung**

Kraftfahrzeug Lenkschloß mit einem Gehäuse 1 und mit einem in dem Gehäuse 1 angeordneten Schließzylinder 4, dessen Zylinderkern mit seinem inneren Ende ein Steuerteil 6 verdreht, wobei ein Sperrstück 9 mittels des Steuerteiles 6 in Richtung der Lenksäule 2 bewegbar ist und in einer sperrenden Stellung die Bewegung der Lenksäule 2 sperrt und wobei das Sperrstück 9 in seiner sperrenden Stellung mittels einer einen verschieblich gelagerten Sicherungsbolzen 15 aufweisenden Diebstahlsicherung blockierbar ist, wobei die Diebstahlsicherung ein verschieblich gelagertes Rückhaltemittel 6, 21 aufweist, das ein Ausrücken des Sicherungsbolzens 15 in die blockierende Stellung verhindert, wobei das Ausrücken des Sicherungsbolzens 15 durch eine Verschiebung des Rückhaltemittels 6, 21 in eine der beiden Richtungen entlang der Schloßachse 18 einleitbar ist.

## Beschreibung

Die vorliegende Erfindung betrifft ein Kraftfahrzeuglenkradschloß mit einem Gehäuse und mit einem in dem Gehäuse angeordneten Schließzylinder, dessen Zylinderkern mit seinem inneren Ende ein Steuerteil verdreht, wobei ein Sperrstück mittels des Steuerteiles in Richtung der Lenksäule bewegbar ist und in einer sperrenden Stellung die Bewegung der Lenksäule sperrt und wobei das Sperrstück in seiner sperrenden Stellung mittels einer einen verschieblich gelagerten Sicherungsbolzen aufweisenden Diebstahlsicherung blockierbar ist.

Derartige Kraftfahrzeuglenkschlösser sind in verschiedenen Ausführungsformen bekannt, wobei die Diebstahlsicherung einen Sicherungsbolzen aufweist, der in das Sperrstück eingreift, sobald der Schließzylinder oder das den Schließzylinder aufnehmende Gehäuse verbogen wird oder abbricht. Die bekannten Schlösser mit Diebstahlsicherung sind so konzipiert, daß der Sicherungsbolzen unwiederbringlich in der das Sperrstück sperrenden Stellung verbleibt. Zur Freigabe der Lenksäule muß das Schloß komplett ausgebaut werden. Mit diesen Lenkschlössern soll der von den Kraftfahrzeugversicherungen vorgeschriebene Sicherheitsstandard erfüllt werden.

Nachteilig an den bisher bekannten Lenkschlössern ist, daß sie vergleichsweise aufwendig aufgebaut sind und aus einer relativ hohen Anzahl von Einzelelementen bestehen und daß sie keine ausreichende Sicherheit gegen besonders findige Formen der Manipulation bieten. So ist es bei den bekannten Schlössern beispielsweise möglich, den mit dem Schloß verbundenen Zündschalter auszubauen und sich dem Schloß von hinten zu nähern.

Aufgabe der vorliegenden Erfindung ist es, ein Kraftfahrzeuglenkschloß zu schaffen, das bei einfachem mechanischen Aufbau und kostengünstiger Fertigung eine zuverlässige Diebstahlsicherung enthält, die eine große Sicherheit gegen jedwelche unsachgemäße Manipulation bietet.

Diese Aufgabe wird durch ein Kraftfahrzeuglenkschloß nach Anspruch 1 gelöst.

Besonderer Vorteil des erfindungsgemäßen Lenkschlosses ist, daß seine Diebstahlsicherung sowohl bei einer Manipulation am Schließzylinder als auch bei einer Manipulation am Zündschalter auslöst und damit das Entnehmen des in die Lenksäule eingedrungenen Sperrstückes durch einen Sicherungsbolzen völlig blockiert. Das Auslösen der Diebstahlsicherung wird dabei durch eine Verschiebung des Rückhaltemittels in eine der beiden Richtungen auf der Schloßachse eingeleitet. Das erfindungsgemäße Schloß zeichnet sich dabei durch besonders einfachen Aufbau und damit durch erhöhte Zuverlässigkeit aus. Wegen der vergleichsweise geringen Anzahl der Bauteile ist es einfach und kostengünstig herzustellen und läßt sich zudem besonders einfach an der Lenksäule montieren. Das Lenkschloß bietet ein Höchstmaß an Sicherheit und erfüllt damit die von den Kraftfahrzeugversicherungen vorgegebenen Mindestanforderungen. So wird es durch das Lenkschloß unmöglich, das Kraftfahrzeug innerhalb einer Zeit von weniger als fünf Minuten aufzubrechen und durch Fortfahren zu entwenden.

Die Diebstahlsicherung des erfindungsgemäßen Lenkschlosses löst beispielsweise dann aus, wenn ein Negativhammer in den Zylinderkern eingedreht und verankert wird oder wenn das Schloßgehäuse im Bereich des Schließzylinders mit einem aufgesteckten Rohr abgebrochen wird oder aber wenn das Schloßgehäuse im Bereich des Schließzylinders mit einem Meißel aufgemeißelt wird. Gleichfalls bietet das erfindungsgemäße Schloß einen Schutz gegen ein Abklippsen oder Abschrauben des Zündanlaßschalters oder auch gegen die völlige Zerstörung des Zündanlaßschalters. Nach einer solchen Manipulation ist das Lenkrad blockiert und kann nicht mehr entriegelt werden.

Das Rückhaltemittel, welches das Ausrücken des Sicherungsbolzens in die blockierende Stellung verhindert, weist vorteilhafter Weise ein Riegelglied beispielsweise in Form einer verschwenkbaren Riegelscheibe auf, die an dem vorteilhafterweise mit Federkraft vorgespannten Sicherungsbolzen anliegt und sein Ausrücken durch Formschluß verhindert. Das Rückhaltemittel weist außerdem vorteilhafter Weise zwei entlang der Schloßachse verschiebliche Bauteile auf, die der Riegelscheibe jeweils eine Auflage bieten. Bei einem Entzug einer der beiden Auflagen wird die Bewegung des Riegelgliedes und damit das Ausrücken des Sicherungsbolzens einleitet.

Vorteilhafter Weise wird die eine Auflage von dem verschieblich gelagerten Steuerteil und die andere Auflage von einer ebenfalls entlang der Schloßachse verschieblich gelagerten Buchse vorgesehen. Das Riegelglied liegt somit zwischen zwei Auflagen und kippt um, sobald ihm eine der Auflagen entzogen wird, wobei dadurch zeitgleich das Ausrücken des durch das Riegelglied blockierten Sicherungsbolzens eingeleitet wird.

Sollte der Dieb beispielsweise den Schließzylinder komplett entfernt haben, ist es ihm nicht möglich, das Steuerteil in seinen Originalzustand zurückzuschieben oder zu drehen, um das Lenkschloß manuell zu entriegeln, da die Entriegelung durch das Riegelglied verhindert wird. Auch ist es dem Dieb nicht möglich, nach dem Entfernen des Zündanlaßschalters die Buchse in ihren Originalzustand zurückzuschieben und das Lenkschloß manuell zu entriegeln, da dies ebenfalls durch das Riegelglied verhindert wird.

Vorteilhafterweise wirken der Sicherungsbolzen und das Riegelglied über ein Keilgetriebe zusammen, wobei das Riegelglied in einer vorteilhaften Ausführungsform statt einer linearen Keilfläche eine Steuerkurve aufweist, so daß die geradlinige Bewegung des Sicherungsbolzens eine Kippbewegung des Riegelgliedes hervorruft.

Das Lenkschloß realisiert mit dem mindestens zweiteiligen Rückhaltemittel insofern eine 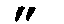 oder" Funktion als die Diebstahlsicherung einerseits durch Manipulation am Schließzylinder oder durch Manipulation am Zündanlaßschalter ausgelöst wird. Das Schloß bietet mit einfachen Mittel Schutz gegen Aufbruch von beiden Seiten. Durch das erfindungsgemäße Lenkradschloß wird die Aufbruchzeit drastisch erhöht.

Vorteilhafter Weise ist die verschwenkbare Riegelscheibe derartig ausgebildet, daß sie eine Rückführung der Buchse bzw. des Steuerteils in ihre Ausgangsstellung verhindert. Dazu liegt die Riegelscheibe vorteilhafterweise mit einer Ecke gegen die Buchse bzw. das Steuerteil an und blockiert damit dessen Bewegung.

In einer besonders vorteilhaften Ausführungsform sind sowohl die Buchse als auch das Steuerteil von einer Federkraft derart beaufschlagt, daß ein Entfernen des Zündschalters, an dem die Buchse anliegt, oder ein Entfernen des Schließzylinders, an dem das Steuerteil anliegt, ein Verschieben der Buchse bzw. des Steuerteiles entlang der Schloßachse durch Federkraft hervorgeruft. Durch das Verschieben des Steuerteils bzw. der Buchse wird der Riegelscheibe eine Auflage entzogen, was zur sofortigen Blockierung des Schlosses durch den Sicherungsbolzen führt.

In einer weiteren vorteilhaften Ausführungsform ist das Sperrstück eine Schwenkscheibe, die durch einen auf dem Steuerteil befindlichen Steuernocken zwischen einer sperrenden und einer entsperrten Stellung verschwenkbar ist, wobei der Steuernocken eine Ausnehmung der Schwenkscheibe durchragt. Dadurch ist ein besonders einfacher Aufbau des erfindungsgemäßen Lenkschlosses und eine besonders zuverlässige Funktion des Sperrstückes gegeben.

Das erfindungsgemäße Lenkschloß ist außerdem so konzipiert, daß es bei eingestecktem und verdrehtem Zündschlüssel in seiner Normalstellung gehalten wird, so daß es in dieser Stellung bequem eingebaut bzw. ausgetauscht werden kann. Für die anfängliche Montage ist es vorteilhaft, das Schloß und seine beweglichen Teile durch Protektoren zu sichern, die später entfernt werden können.

Ein besonderes Ausführungsbeispiel des erfindungsgemäßen Lenkschlosses ist in den Figuren 1 bis 4 dargestellt und wird im folgenden näher beschrieben.

Es zeigen:
- **Figur 1**: Einen Schnitt durch ein erfindungsgemäßes Lenkschloß in Normalstellung,
- **Figur 2**: einen Schnitt durch ein Lenkschloß in sperrender Position nach Herausziehen des Schließzylinders,
- **Figur 3**: einen axialen Schnitt durch das Lenkschloß entlang der Linie I-I und
- **Figur 4**: einen Längsschnitt durch das erfindungsgemäße Lenkschloß nach Abnahme des Zündschalters.

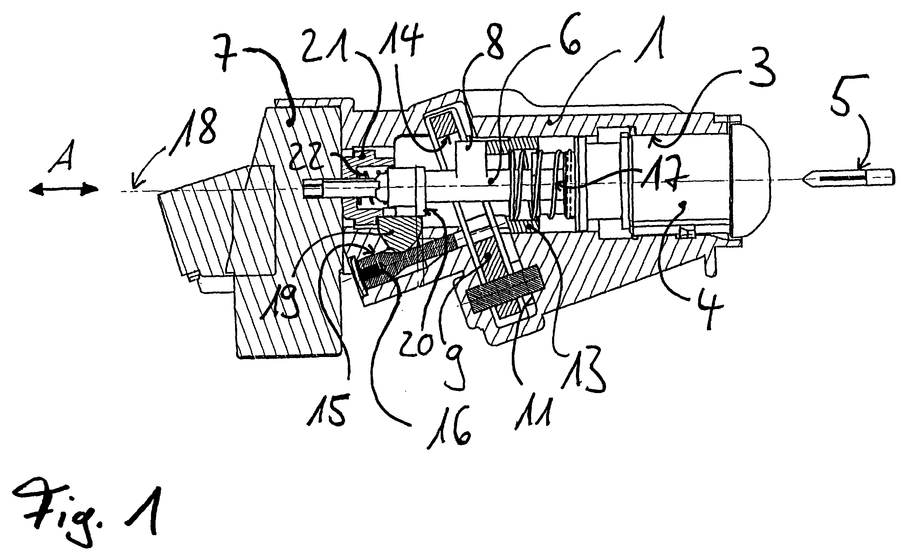

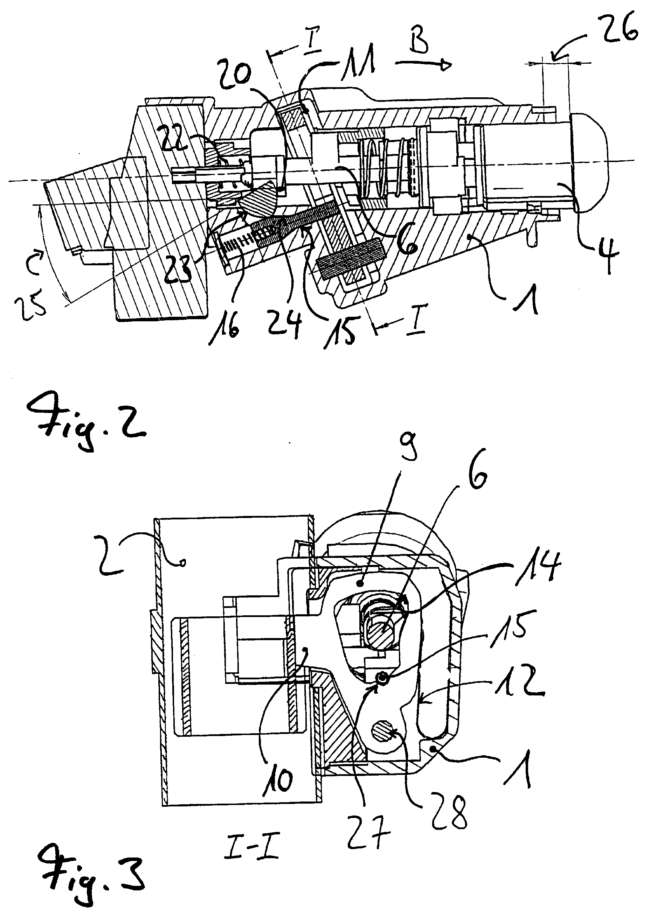

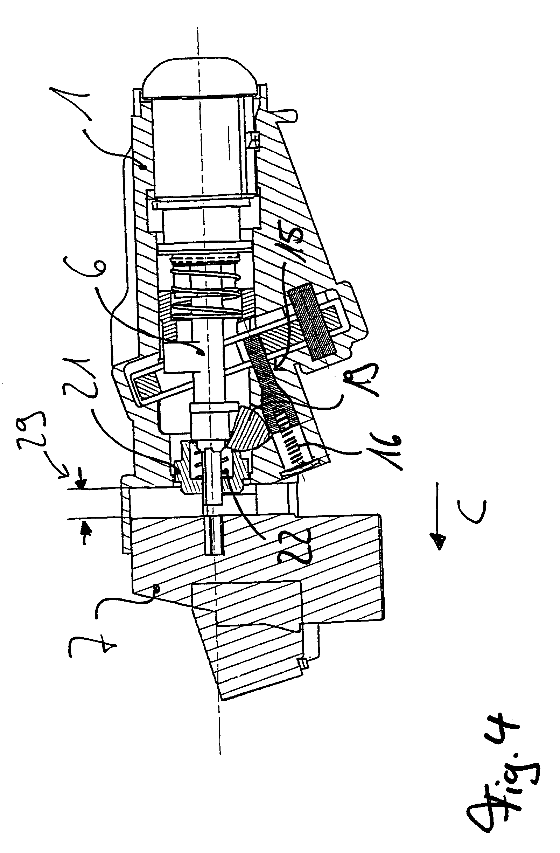

In Figur 1 ist ein Lenkschloß mit einem massiven Schloßgehäuse 1 dargestellt, in dem die Einzelteile des Lenkschlosses gelagert sind. Das Schloßgehäuse 1 weist eine Ausnehmung zur Befestigung an einer Lenksäule 2 (Figur 3) auf. In das Schloßgehäuse 1 ist ein Schloßkanal 3 eingebracht, in dem ein Schließzylinder 4 gelagert ist. Der Schließzylinder 4 wird durch Drehen eines einsteckbaren Schlüssels 5 betätigt. Der Schließzylinder verdreht seinerseits mit seinem Zylinderkern ein an seinem inneren Ende angebrachtes Steuerteil 6, das mit seiner Spitze einen am Ende des Schloßkanals 3 angebrachten elektrischen Schalter 7 betätigt. Das Steuerteil 6 ist im Schloßkanal 3 innerhalb eines bestimmten Weges verschieblich gehalten.

Das Steuerteil 6 treibt mit einem auf der Welle befindlichen Steuernocken 8 eine Schwenkscheibe 9, welche die Funktion eines Sperriegels hat und mit einer Rastnase 10 in eine Ausnehmung der in Figur 3 gezeigten Lenksäule einrastet. Die Schwenkscheibe 9 ist in einer im Schloßgehäuse 1 befindlichen Nut 11 geführt, die etwa parallel zur Lenksäule ausgerichtet ist. Die Schwenkscheibe 9 wird durch eine Blattfeder 12 beaufschlagt und rastet bei entsprechender Stellung der Lenksäule bei abgezogenem Schlüssel 5 automatisch in die Ausnehmung ein und setzt die Lenksäule fest. Im Schloßkanal 3 ist außerdem eine von einer Feder 17 beaufschlagte Sicherungsbuchse 13 verschieblich gelagert, die in einer entsperrenden Stellung der Schwenkscheibe 9 eine Ausnehmung 14 in der Schwenkscheibe durchragt.

Die Diebstahlsicherung des Lenkschlosses weist einen Sicherungsbolzen 15 auf, der in einem im Gehäuse 1 eingebrachten Kanal verschieblich gelagert und durch eine Feder 16 in einer Normalstellung vorgespannt ist. Mit dem Sicherungsbolzen 15 ist das Sperrstück 9 in seiner die Lenksäule 2 sperrenden Stellung blockierbar, wenn der vorgespannte Sicherungsbolzen 15 aus der Normalstellung in die blockierende Stellung ausrückt. Das Ausrücken des Sicherungsbolzens 15 wird durch ein verschieblich gelagertes Rückhaltemittel verhindert, das entlang der Schloßachse 18 verschieblich gelagert ist. Das Rückhaltemittel ist dabei in beiden Richtungen (Doppelpfeil A) der Schloßachse 18 verschieblich.

Im vorliegenden Ausführungsbeispiel weist das Rückhaltemittel in Wesentlichen drei Bauteile auf. So wird der Sicherungsbolzen 15 von einem Riegelglied in Form einer verschwenkbaren Riegelscheibe 19 kraftschlüssig beaufschlagt, die das Ausrücken des Sicherungsbolzens 15 verhindert. Die Riegelscheibe 19 wird einerseits von einer ersten am Steuerteil 9 angeformten Auflage 20 und andererseits von einer zweiten von einer Buchse 21 gebildeten Auflage gegen ein Verschwenken gesichert. Zwischen dem Steuerteil 9 und der Buchse 21 ist eine Spiralfeder 22 angeordnet, die einerseits die Buchse 21 in axialer Richtung zum Zündschalter 7 hin beaufschlagt. Die Feder 22 beaufschlagt gleichzeitig das Steuerteil 9 in Richtung des Schließzylinders 4. Beim Entfernen des Zündschalters 7 oder beim Entfernen des Schließzylinders 4 wird somit der Riegeischeibe eine Auflage entzogen, so daß diese verschwenkt (Figuren 2 und 4) und das Ausrücken des Sicherungsbolzens 15 bewirkt.

In der hier gezeigten Ausführungsform weist die Riegelscheibe 19 eine Steuerkurve 23 auf, an der eine Keilfläche 24 des Sicherungsbolzens 15 anliegt (Figur 2). Sobald der Riegelscheibe 19 eine der Auflagen entzogen wird, bewirkt der kraftbeaufschlagte Sicherungsbolzens 15 durch sein Ausrücken das Verschwenken der Scheibe 19. Die um einen Winkel 25 aus ihrer Normalstellung verschwenkte Scheibe 19 verriegelt dabei mit einer ihrer Kanten je nach dem entweder die Verschiebung des Steuerteiles 6 oder der Buchse 21. Die Scheibe läßt sich bei ausgerücktem Sicherungsbolzen 15 nicht wieder in ihre ursprüngliche Lage zurückführen.

In Figur 2 ist dargestellt, wie die Diebstahlsicherung nach dem Herausziehen des Schließzylinders 4 (Pfeil B) um einen Weg 26 auslöst. Beim Herausziehen verschiebt sich das Steuerteil 6 durch die Beaufschlagung der Feder 22 in Richtung des Schließzylinders 4, so daß der Riegelscheibe 19 die rechte Auflage 20 entzogen wird. Die auf die Riegelscheibe 19 wirkende Kraft des Sicherungsbolzens 15 verschwenkt dabei die Scheibe 19, welche die Bewegung des Steuerteiles 6 gegen die Pfeilrichtung B verriegelt. Der Sicherungsbolzen 15 rückt dabei in eine Ausnehmung 27 der um die Achse 28 (Figur 3) verschwenkte Schwenkscheibe 9 und verriegelt diese.

In Figur 4 ist dargestellt, wie die Diebstahlsicherung nach dem Abnehmen des Zündschalters 7 (Pfeil C) um einen Weg 29 auslöst. Beim Herausziehen verschiebt sich die Buchse 21 durch die Beaufschlagung der Feder 22 in Richtung des Schalters 7, so daß der Riegelscheibe 19 die linke Auflage entzogen wird. Die auf die Riegelscheibe 19 wirkende Kraft des Sicherungsbolzens 15 entlang der Steuerkurve 23 verschwenkt dabei die Scheibe 19, welche die Bewegung der Buchse 23 gegen die Pfeilrichtung C verriegelt. Der Sicherungsbolzen 15 rückt dabei in eine Ausnehmung 27 der um die Achse 28 (Figur 3) verschwenkte Schwenkscheibe 9 und verriegelt diese.

## Patentansprüche

1. Kraftfahrzeug Lenkschloß mit einem Gehäuse (1) und mit einem in dem Gehäuse (1) angeordneten Schließzylinder (4), dessen Zylinderkern mit seinem inneren Ende ein Steuerteil (6) verdreht, wobei ein Sperrstück (9) mittels des Steuerteiles (6) in Richtung der Lenksäule (2) bewegbar ist und in einer sperrenden Stellung die Bewegung der Lenksäule (2) sperrt und wobei das Sperrstück (9) in seiner sperrenden Stellung mittels einer einen verschieblich gelagerten Sicherungsbolzen (15) aufweisenden Diebstahlsicherung blockierbar ist,
**dadurch gekennzeichnet,** daß die Diebstahlsicherung ein verschieblich gelagertes Rückhaltemittel (6,21) aufweist, das ein Ausrücken des Sicherungsbolzens (15) in die blockierende Stellung verhindert, wobei das Ausrücken des Sicherungsbolzens (15) durch eine Verschiebung des Rückhaltemittels (6,21) in eine der beiden Richtungen entlang der Schloßachse (18) einleitbar ist.

2. Lenkschloß nach Anspruch 1,
**dadurch gekennzeichnet,** daß der Sicherungsbolzen (15) in einer nicht ausgerückten Normalstellung durch eine Federkraft vorgespannt ist.

3. Lenkschloß nach Anspruch 1 oder 2,
**dadurch gekennzeichnet,** daß das Rückhaltemittel (6,21) und der Sicherungsbolzen vermittels eines Riegelgliedes, insbesondere in Form einer verschwenkbaren Riegelscheibe (19), zusammenwirken, wobei das Riegelglied das Ausrücken des Sicherungsbolzens (15) verriegelt.

4. Lenkschloß nach einem der vorherigen Ansprüche,
**dadurch gekennzeichnet,** daß das Rückhaltemittel (6,21) eine Auflage (20) aufweist, auf der die Riegelscheibe (19) aufliegt.

5. Lenkschloß nach einem der vorherigen Ansprüche,
**dadurch gekennzeichnet,** daß das Rückhaltemittel (6,21) zwei getrennt voneinander bewegliche Auflagen aufweist.

6. Lenkschloß nach Anspruch 5,
**dadurch gekennzeichnet,** daß die eine erste Auflage (20) an dem verschieblichen Steuerteil (6) und die andere zweite Auflage an einer entlang der Schloßachse verschieblich gelagerten Buchse (21) angeordnet ist, wobei das Riegelglied (19) an beiden Auflagen anliegt.

7. Lenkschloß nach einem der vorherigen Ansprüche,
**dadurch gekennzeichnet,** daß die Riegelscheibe (19) eine Steuerkurve (23) aufweist, die mit einer am Sicherungsbolzen (15) befindlichen Keilfläche (24) zusammenwirkt.

8. Lenkschloß nach einem der vorherigen Ansprüche,
**dadurch gekennzeichnet,** daß das Steuerteil (15) von einer Federkraft beaufschlagt ist, wobei nach unsachgemäßer Manipulation am Schließzylinder (4), insbesondere nach dem Entfernen des Schließzylinders, das Steuerteil (6) in axialer Richtung zum Schließzylinder (4) verschoben wird und damit das Ausrücken des Sicherungsbolzens (15) einleitet.

9. Lenkschloß nach einem der vorherigen Ansprüche,
**dadurch gekennzeichnet,** daß die Buchse (21) von einer Federkraft beaufschlagt ist, wobei nach unsachgemäßer Manipulation am Zündschalter (7) insbesondere nach dem Entfernen des Zündschalters (7) die Buchse (21) in axialer Richtung zum Zündschalter (7) verschoben wird und damit das Ausrücken des Sicherungsbolzens (15) bewirkt.

10. Lenkschloß nach einem der vorherigen Ansprüche,
**dadurch gekennzeichnet,** daß die Riegelscheibe (19) nach dem Auslösen der Diebstahlsicherung die Bewegung des Rückhaltemittels (15) verriegelt.

11. Lenkschloß nach einem der vorherigen Ansprüche,
**dadurch gekennzeichnet,** daß das Sperrstück (9) eine Schwenkscheibe ist, die durch einen auf dem Steuerteil (6) befindlichen Steuernocken (8) zwischen einer sperrenden und einer entsperrten Stellung verschwenkbar ist, wobei der Steuernocken (8) in eine Ausnehmung der Schwenkscheibe (9) eingreift.
